# EUROPÄISCHE PATENTANMELDUNG

(11) **EP 1 500 564 A1**
(43) Veröffentlichungstag der Anmeldung: **26.01.2005**
(21) Anmeldenummer: 04024940.1
(22) Anmeldetag: 16.01.2003
(51) Int. Cl.: B60R 22/195, B60R 22/26

(54) **Fahrzeuginsassen-Rückhaltesystem**

(30) Priorität: 18.01.2002 DE 20200741 U
(62) Teilanmeldung aus: 03000654.8
(71) Anmelder: TRW Automotive GmbH, 73553 Alfdorf (DE)
(72) Erfinder: Lutz, Jürgen, 89555 Steinheim (DE); Strobel, Ralf, 73525 Schwäbisch Gmünd (DE)
(74) Vertreter: Kitzhofer, Thomas, Dipl.-Ing.

(57) **Zusammenfassung**

Ein Fahrzeuginsassen-Rückhaltesystem weist eine Sicherheitsgurtanordnung (12) mit einem Gurtband (14), einem Gurtschloß (16) und einen End- oder Umlenkbeschlag (18) auf. Es ist wenigstens ein mit einem Angriffsmittel (30) verbundener, als End- oder Umlenkbeschlagstraffer ausgebildeter Gurtstraffer (20) vorgesehen. Das Angriffsmittel (30) ist mit dem End- oder Umlenkbeschlag (18) verbunden. Die Verbindung zwischen dem Angriffsmittel (30) und dem Endoder Umlenkbeschlag (18) ist in Form eines Kupplungsmechanismus (44e) realisiert.

## Beschreibung

Die Erfindung betrifft ein Fahrzeuginsassen-Rückhaltesystem gemäß dem Oberbegriff des Anspruchs 1.

Um eine relative Verschiebung zwischen dem Fahrzeuginsassen, der auf dem Fahrzeugsitz sitzt und z.B. einem Gurtschloß oder einem Gurtstraffer zu vermeiden, ist es sinnvoll, derartige Elemente des Sicherheitsgurtsystems am Fahrzeugsitz selbst anzuordnen. Vor allem bei der Gurtstraffung ist solch eine Anordnung vorteilhaft.

Ziel der Erfindung ist es, ein flexibel einsetzbares Fahrzeuginsassen-Rückhaltesystem zu schaffen.

Dies wird bei einem Fahrzeuginsassen-Rückhaltesystem durch die Merkmale des Anspruchs 1 erreicht. Die Verbindung zwischen dem Angriffsmittel und dem End- oder Umlenkbeschlag durch einen Kupplungsmechanismus zu realisieren, ist gleich aus mehreren Gründen vorteilhaft. Zum einen läßt sich so gemäß einem Baukastenprinzip problemlos ein Rückhaltesystem konfigurieren, das einen Gurtstraffer aufweist, genauso wie ein Rückhaltesystem, bei dem der End- oder Umlenkbeschlag direkt an einem Fahrzeugsitz fixiert ist. Zum anderen erlaubt eine derartige Verbindung, den Fahrzeugsitz, wie üblich, als letztes Element im Fahrzeug zu montieren, d.h. nach dem Einbau des Sicherheitsgurtsystems. In diesem Fall wird der bereits im Fahrzeug angebrachte End- oder Umlenkbeschlag einfach nach dem Einbau des Fahrzeugsitzes mit dem Angriffsmittel über den Kupplungsmechanismus verbunden.

Der Kupplungsmechanismus kann z.B. eine Gewindehülse und einen Gewindebolzen aufweisen, wobei eines der beiden genannten Bauteile mit dem Angriffsmittel und das andere mit dem End- oder Umlenkbeschlag verbunden ist.

In einer anderen Ausführungsform weist der Kupplungsmechanismus eine erste Kupplungshälfte mit wenigstens einer Öffnung und eine zweite Kupplungshälfte mit einem Rastnocken auf, wobei der Rastnocken in die Öffnung eingreifen und die Kupplungshälften aneinander fixieren kann und wobei eine der Kupplungshälften mit dem Angriffsmittel und die andere mit dem End- oder Umlenkbeschlag verbunden ist.

Nach einer anderen Ausführungsform weist die erste Kupplungshälfte des Kupplungsmechanismus wenigstens eine Vertiefung auf, während die zweite Kupplungshälfte wenigstens einen Vorsprung aufweist, der in die Vertiefung eingreifen und so die beiden Kupplungshälften aneinander fixieren kann. Eine der Kupplungshälften ist mit dem Angriffsmittel und die andere mit dem End- oder Umlenkbeschlag verbunden. Die beiden Kupplungshälften können zur Sicherung der Kupplung von einer verschiebbaren Hülle umgeben sein.

Der Kupplungsmechanismus kann auch eine Steckkupplung sein, insbesondere eine Kugelkupplung.

All diese Kupplungsmechanismen erlauben ein schnelles und sicheres Befestigen eines End- oder Umlenkbeschlages am Angriffsmittel des Gurtstraffers.

Es kann ein langgestrecktes, starres Befestigungselement vorgesehen sein, das sich unterhalb eines Fahrzeugsitzes erstreckt. An diesem Befestigungselement kann der Gurtstraffer montiert sein. Die Verwendung des Befestigungselements gestattet es, die benötigten Elemente des Sicherheitsgurtsystems nach Belieben mit dem Fahrzeugsitz zu verbinden. Da sich das Befestigungselement unter dem Sitz erstreckt, entsteht keinerlei optische Beeinträchtigung. Außerdem kann das Befestigungselement eine weitere Aufgabe erfüllen, indem es zur Stabilität des Fahrzeugsitzes beiträgt.

So läßt sich ein flexibles Baukastensystem verwirklichen. So können z.B. zwei Gurtstraffer vorgesehen sein, die beide am Befestigungselement befestigt sind. Einer dieser Gurtstraffer kann ein Schloßstraffer sein und einer der Gurtstraffer ein End- oder Umlenkbeschlagstraffer. Genausogut kann aber, wenn nur ein Gurtstraffer vorgesehen ist, ein entsprechender End- oder Umlenkbeschlag für das andere Ende des Sicherheitsgurtes am Befestigungselement befestigt sein. Das Befestigungselement ist bevorzugt so ausgelegt und so auf die Geometrie von Gurtstraffern, End- und Umlenkbeschlägen abgestimmt, daß ohne eine Veränderung des Befestigungselements sowohl ein oder mehrere Gurtstraffer oder direkt ein End- oder ein Umlenkbeschlag daran befestigt werden können.

Bevorzugt sind Angriffsmittel und End- oder Umlenkbeschlag an ihrer Verbindungsstelle über ein lösbares Bauteil am Befestigungselement montiert. Auf diese Weise kann die Verbindungsstelle am Befestigungselement gesichert werden, so daß sie vor Beschädigungen geschützt ist und ein Klappern im Fahrzeug vermieden wird. Das Bauteil kann so ausgebildet sein, daß es eine Sollbruchstelle aufweist, so daß bei einer Straffung die Verbindungsstelle ohne Zeitverzug bewegbar ist.

Bevorzugt ist am Befestigungselement ein auf die Geometrie des End- oder Umlenkbeschlag abgestimmtes Haltemittel vorgesehen, das bei nicht vorgesehenem End- oder Umlenkbeschlagstraffer eine unmittelbare Befestigung des End- oder Umlenkbeschlags am Befestigungselement erlaubt. Es ist vorteilhaft, wenn das Haltemittel durch eine Kupplungshälfte des Kupplungsmechanismus gebildet ist, die in diesem Fall fest mit dem Befestigungselement verbunden ist.

Weitere Merkmale und Vorteile der Erfindung ergeben sich aus der nachfolgenden Beschreibung diverser Ausführungsbeispiele mit Bezug auf die beigefügten Zeichnungen. In diesen zeigen:
- Figur 1 eine schematische Darstellung eines erfindungsgemäßen Fahrzeuginsassen-Rückhaltesystems mit einem Fahrzeugsitz und einer Sicherheitsgurtanordnung;
- Figur 2ein Detail aus Figur 1;
- Figur 3ein Befestigungselement mit einer Gurtbandführung des Fahrzeuginsassen-Rückhaltesystems nach Fig. 1;
- Figur 4ein Detail eines Befestigungselements eines Fahrzeuginsassen-Rückhaltesystems;
- Figur 5einen Querschnitt einer Gurtführung eines Fahrzeuginsassen-Rückhaltesystems;
- Figur 6ein Detail eines Fahrzeuginsassen-Rückhaltesystems;
- Figur 7ein Detail eines Fahrzeuginsassen-Rückhaltesystems;
- Figur 8 eine Verschraubung eines End- oder Umlenkbeschlags mit einem Angriffsmittel,
- Figuren 9 bis 14 diverse Kupplungsmechanismen zur Verbindung eines Endoder Umlenkbeschlags mit einem Angriffsmittel zur Verwendung bei einem erfindungsgemäßen Fahrzeuginsassen-Rückhaltesystem.

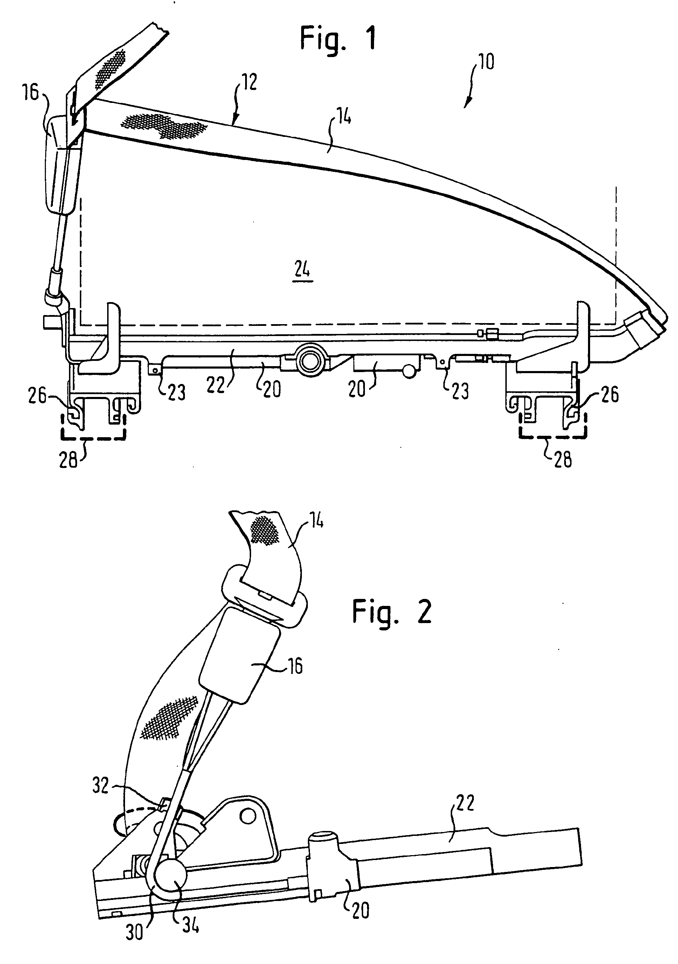

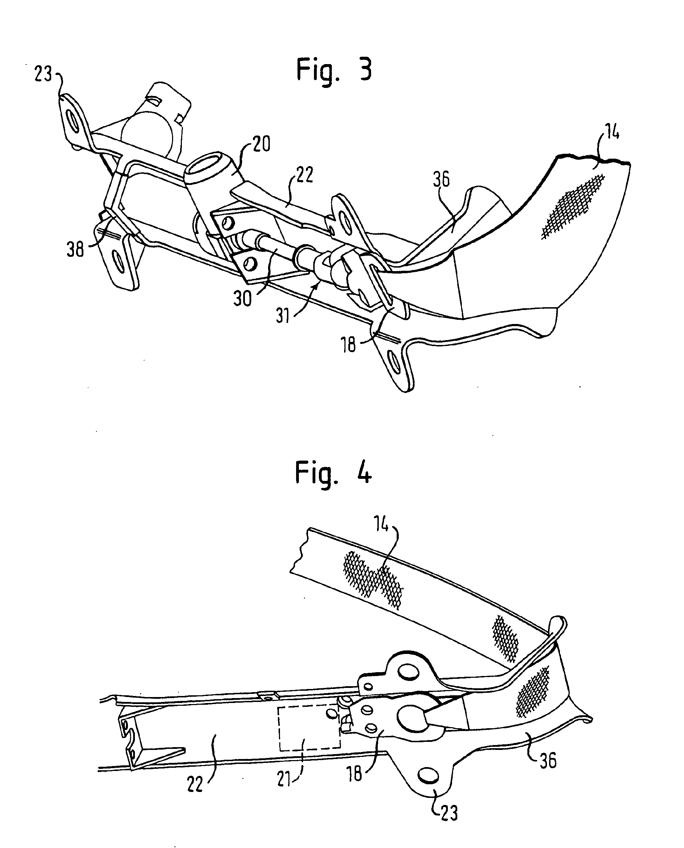

Das in Figur 1 gezeigte Fahrzeuginsassen-Rückhaltesystem 10 umfaßt eine Sicherheitsgurtanordnung 12, mit einem Gurtband 14, einem Gurtschloß 16 und einem mit dem Gurtband 14 verbundenen Beschlag 18 (siehe Figur 3). Es ist mindestens ein Gurtstraffer 20 vorgesehen. Im in Figur 1 gezeigten Beispiel sind ein Schloßstraffer (linker Straffer 20 in Figur 1) und ein End- oder Umlenkbeschlagstraffer (rechter Straffer 20 in Figur 1) vorgesehen, die vorzugsweise beide bekannte pyrotechnisch betriebene Linearstraffer sind. Genauso kann jedoch nur ein Gurtstraffer zur Ausführung beider Straffbewegungen vorgesehen sein.

Außerdem ist ein langgestrecktes, starres Befestigungselement 22 vorgesehen, das in diesem Beispiel als U-förmig gebogene Metallschiene ausgebildet ist. Das Befestigungselement 22 ist unterhalb eines Fahrzeugsitzes 24 angeordnet (in Figur 1 durch gestrichelte Linien angedeutet) und bevorzugt über am Befestigungselement 22 ausgebildete abstehende Laschen 23 am Fahrzeugsitz 24 befestigt. Das Befestigungselement 22 ist an zwei Schienen 26, die mit dem Fahrzeugsitz 24 verbunden sind, befestigt. Die Schienen 26 sind so ausgebildet, daß sie zur Fahrzeugsitzverschiebung zum Eingriff in fahrzeugbodenfeste Gegenschienen 28 eingreifen können. Die Anordnung des Fahrzeugsitzes 24 auf den Schienen 26 und 28 entspricht dem bekannten Stand der Technik und wird hier nicht weiter beschrieben.

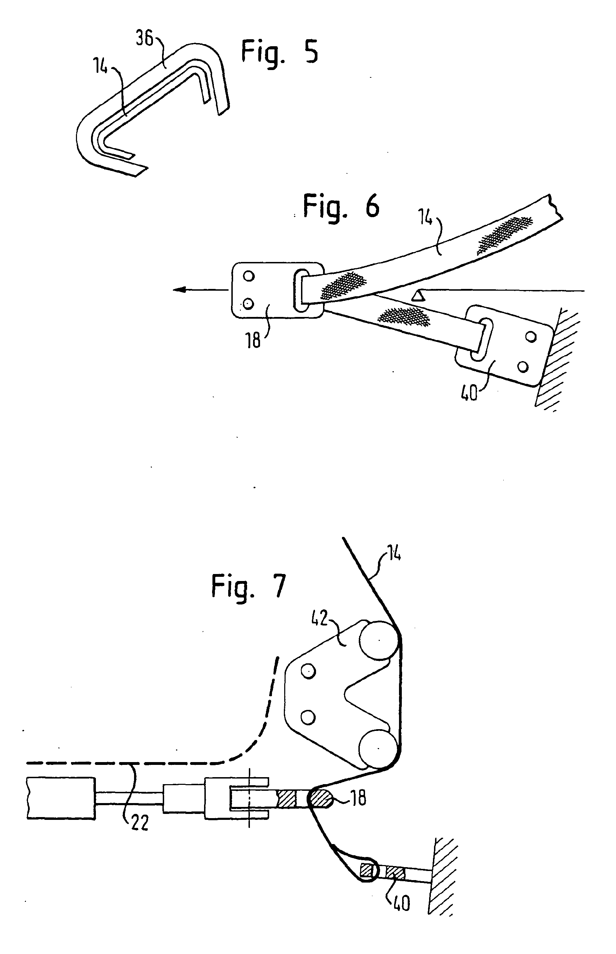

Das Fahrzeuginsassen-Rückhaltesystem gemäß der Erfindung beruht auf einem Baukastenprinzip. Das am Fahrzeugsitz befestigte Befestigungselement 22 weist eine Vielzahl von Befestigungsmöglichkeiten für die Komponenten des Rückhaltesystems auf, so daß sich das Fahrzeuginsassen-Rückhaltesystem flexibel und einfach für die für das jeweilige Fahrzeug gewünschte Ausführung des Rückhaltesystems konfigurieren läßt. Der oder die Gurtstraffer 20 sind auf jeden Fall am Befestigungselement 22 befestigt. Das Gurtschloß 16 und/oder der Beschlag 18 können jeweils entweder mit dem oder den Gurtstraffer(n) 20 oder, wenn eine Verwendung eines Gurtstraffers für dieses Element nicht gewünscht ist, über ein am Befestigungselement ausgebildetes oder mit diesem verbundenes Haltemittel 21 direkt an dem Befestigungselement 22 montiert sein (siehe z.B. Figur 4). Zur Erhöhung der Stabilität des Befestigungselements 22 ist eine Verstrebung 38 im Bereich eines Gurtstraffers 20 vorgesehen.

Am Befestigungselement 22 ist eine Führung 31 für den Beschlag 18 ausgebildet, in der sich der Beschlag während der Straffung bewegt.

Am Befestigungselement 22 ist gemäß Figur 2 zusätzlich eine Umlenkung 34, z.B. eine Rolle, angebracht, über die das Angriffsmittel 30 vom in etwa senkrecht ausgerichteten Gurtschloß 16 zum waagrecht am Befestigungselement 22 angeordneten Gurtstraffer 20 umgelenkt wird. Für den Schloßstraffer 16, 20 ist zusätzlich eine halbringförmige Führung 32 vorgesehen, die gleichzeitig dazu dient, während des Normalbetriebs das Gurtschloß 16 in seiner Position zu fixieren. Die Führung 32 und die Umlenkung 34 sind bevorzugt an einem Ende des Befestigungselements 22 ausgebildet.

Alternativ hierzu kann die Umlenkung für das Gurtband 14 oder für ein das Gurtschloß 16 bzw. den Beschlag 18 und den Straffer 20 verbindendes Angriffsmittel 30 dadurch erreicht werden, daß die Enden des U-förmigen Befestigungselements 22 seitlich am Fahrzeugsitz 24 entlang ein Stück nach oben gebogen werden. Die Umlenkung wird mit dem Bezugszeichen 36 versehen und ist quasi einstückig am Befestigungselement 22 ausgebildet. Der Querschnitt der Umlenkung 36 verengt sich in Richtung zum Gurtstraffer 20 so weit, daß er kleiner als die Breite des Gurtbands14 wird, wodurch das Gurtband 14 während des Einzugs quer zu seiner Längsrichtung gefaltet wird (siehe Figur 5).

Alternativ kann das Gurtband 14 über die Einzugslänge auch entlang dessen Längsrichtung zusammengenäht sein, so daß seine Breite reduziert ist.

Um die Flexibilität des Baukastensystems möglichst gut ausnützen zu können, ist am zum Befestigungselement 22 geführten Ende des Gurtbands 14 stets ein Beschlag 18 vorgesehen. Dieser Beschlag 18 kann, wie in dem in den Figuren 3 und 4 dargestellten Beispiel, als Endbeschlag ausgebildet sein oder auch, wie im weiteren beschrieben, als Umlenkbeschlag. Der Beschlag 18 ist entweder über das Angriffsmittel 30 mit einem der Gurtstraffer 20 (Figuren 1, 3) oder, wie in Figur 4 angedeutet, direkt mit dem Befestigungselement 22 verbunden, abhängig von der gewünschten Konfiguration des Rückhaltesystems.

In einer anderen Alternative, die in den Figuren 6 und 7 gezeigt ist, ist der Beschlag 18 als Umlenkbeschlag ausgebildet. In diesem Fall ist ein weiterer Beschlag 40 mit dem Gurtband 14 verbunden, der fest am Fahrzeug fixiert ist. Der Beschlag 18 ist entweder über das Angriffsmittel 30 mit einem Gurtstraffer 20 oder direkt mit dem Befestigungselement 22 verbunden.

Die Verwendung eines Umlenkbeschlages an dieser Stelle bietet zwei Vorteile. Zum einen verdoppelt sich die Länge des Straffwegs, zum anderen ist es so möglich, den Sicherheitsgurt bereits vollständig im Fahrzeug zu montieren, bevor der Fahrzeugsitz mit der Fahrzeuginsassen-Rückhaltevorrichtung montiert wird. In diesem Fall muß der Beschlag 18 so ausgebildet sein, daß er nachträglich in den Gurtbandverlauf eingebracht werden kann.

In der in Figur 7 gezeigten Ausführungsform ist zusätzlich eine mit zwei Umlenkrollen bestückte Umlenkung 42 für das Gurtband vorgesehen, die vorzugsweise ebenfalls mit dem Befestigungselement 22 verbunden ist. Diese Umlenkung 42 dient dazu, den Verlauf des Gurtbands 14 vor dem Umlenkbeschlag 18 zu optimieren.

Der Beschlag 18 kann über verschiedene Kupplungsmechanismen, die im folgenden näher beschrieben werden, mit dem Angriffsmittel 30 verbunden sein.

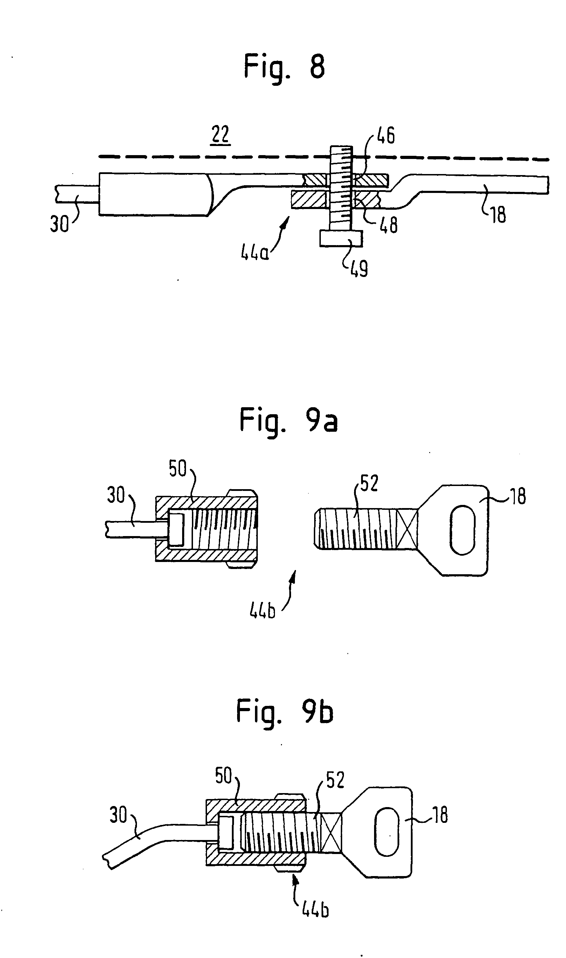

In Figur 8 ist eine Verbindung ohne Verwendung eines Kupplungsmechanismus dargestellt. In diesem Fall besteht das Verbindungselement 44a aus einer am Beschlag 18 sowie einer am Angriffsmittel 30 ausgebildeten Öse 46, 48, die durch eine Schraube 49 oder einen Befestigungsbolzen miteinander verbunden werden können. Diese Lösung ist vor allem in solchen Fällen günstig, in denen der Beschlag 18 auch ohne Verbindung mit einem Straffer 20 am Befestigungselement 22 fixiert werden soll.

Das Verbindungselement 44a ist vorzugsweise so ausgebildet, z.B. flächig, daß eine Verdrehsicherung für das Gurtband 14 erreicht wird.

Die Schraube 49 kann gleichzeitig dazu eingesetzt werden, das Verbindungselement 44a am Befestigungselement 22 zu fixieren. In diesem Fall ist vorzugsweise an der Schraube 49, am Befestigungselement 22 oder am Verbindungselement 44a eine Sollbruchstelle vorgesehen, damit sich das Verbindungselement 44a bei der Straffung vom Befestigungselement 22 lösen kann.

Erfindungsgemäß erfolgt die Verbindung des Beschlags 18 mit dem Angriffsmittel 30 über einen Kupplungsmechanismus.

Eine erste Variante ist in den Figuren 9a und b gezeigt. In diesem Fall ist am Angriffsmittel 30 eine Gewindehülse 50 drehbar befestigt. Am Beschlag 18 ist einstückig ein Gewindebolzen 52 ausgebildet, der mit der Gewindehülse 50 verschraubbar ist. Diese Variante bildet den Kupplungsmechanismus 44b.

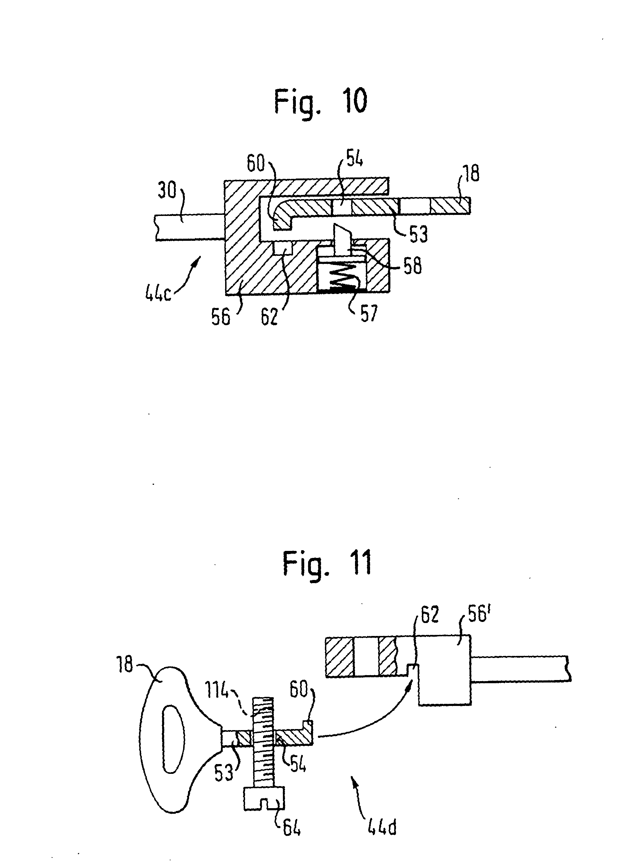

Ein weiterer Kupplungsmechanismus 44c ist in Figur 10 dargestellt. Hier handelt es sich um eine Rastnockenkupplung, vergleichbar mit derjenigen, die in einem Gurtschloß verwendet wird. Eine erste Kupplungshälfte 53, die hier einstückig mit dem Beschlag 18 ausgebildet ist, weist eine Öffnung 54 auf, in die beim Einschub des Beschlags 18 in eine mit dem Angriffsmittel 30 verbundene zweite Kupplungshälfte 56 ein in der zweiten Kupplungshälfte 56 beweglich gehalterter, mit einer Feder 57 beaufschlagter Rastnocken 58 eingreift. Eine am Beschlag 18 ausgebildete Rastnase 60 greift zusätzlich in eine in der zweiten Kupplungshälfte 56 ausgebildete Vertiefung 62.

Es ist auch möglich, wie in Figur 11 für den Kupplungsmechanismus 44d gezeigt, den Rastnocken 58 im Kupplungsteil 56' durch eine Schraube 64 zu realisieren.

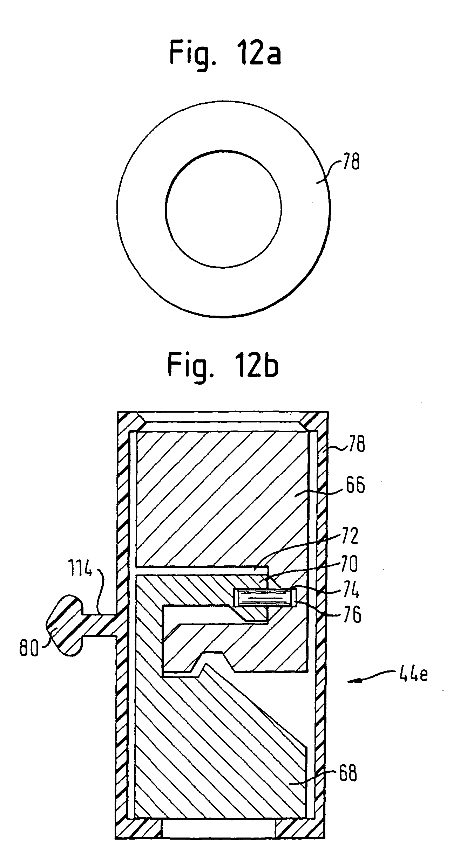

In den Figuren 12a und 12b ist als Kupplungsmechanismus 44e eine Steckkupplung dargestellt, wobei Figur 12a den Querschnitt der Kupplung zeigt. Die Steckkupplung weist eine erste Kupplungshälfte 66, die mit dem Beschlag 18 oder dem Angriffsmittel 30 verbunden ist, und eine zweite Kupplungshälfte 68, die mit dem jeweiligen anderen Bauteil 30, 18 verbunden ist, auf. Eine Nase 70 der zweiten Kupplungshälfte 68 greift in eine Vertiefung 72 der ersten Kupplungshälfte 66. In der Nase 70 ist zusätzlich ein verschiebbar gelagerter Zylinderbolzen 74 angeordnet, der in eine weitere Vertiefung 76 in der ersten Kupplungshälfte 66 eingreift. Nachdem die erste Kupplungshälfte 66 und die zweite Kupplungshälfte 68 zusammengefügt sind, wird eine Kunststoffhülse 78 über die beiden Kupplungshälften 66, 68 geschoben, damit die Kupplung 44e nicht klappert und gegen unbeabsichtigtes Öffnen gesichert ist. An der Kunststoffhülse 78 ist ein Klips 80 ausgebildet, mit der der Kupplungsmechanismus 44e am Befestigungselement 22 fixiert werden kann. Diese Fixierung dient als Verdrehsicherung sowie der Verhinderung eines Klappergeräusches.

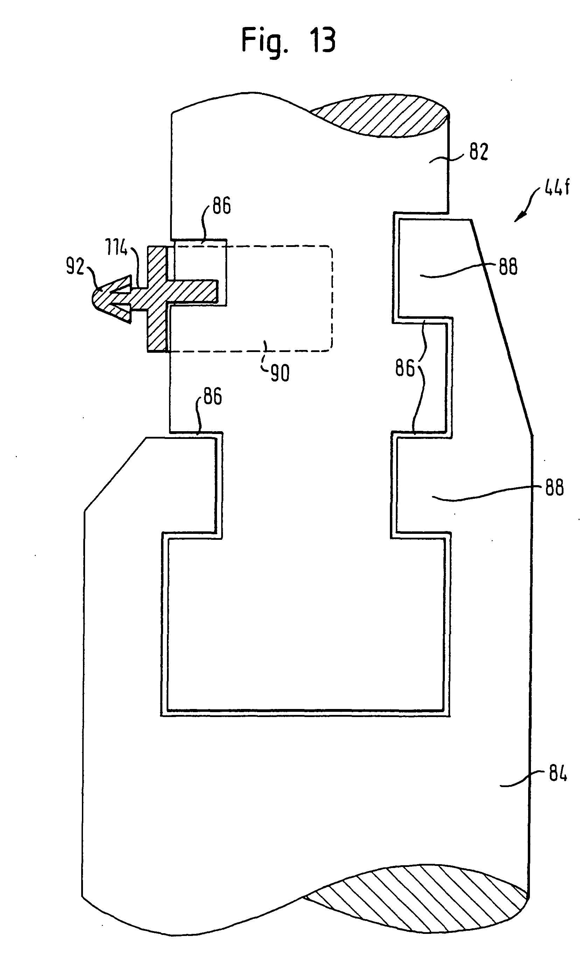

Eine weitere Ausführung eines Kupplungsmechanismus 44f ist in Figur 13 gezeigt. Hier handelt es sich ebenfalls um eine Steckkupplung mit einer ersten Kupplungshälfte 82 und einer zweiten Kupplungshälfte 84, die jeweils mit dem Beschlag 18 bzw. dem Angriffsmittel 30 verbunden sind. An der ersten Kupplungshälfte 82 sind Vertiefungen 86 vorgesehen, in die Rastvorsprünge 88 der zweiten Kupplungshälfte 84 eingreifen. Eine der Kupplungshälften, in diesem Fall die erste Kupplungshälfte 82, ist bevorzugt von einem Klips 90 umgriffen, der eine Rastnase 92 zum Eingriff in das Befestigungselement 22 aufweist. Der Klips 90 kann zusätzlich in einer der Vertiefungen 86 der ersten Kupplungshälfte 82 gegen Verdrehen gesichert sein.

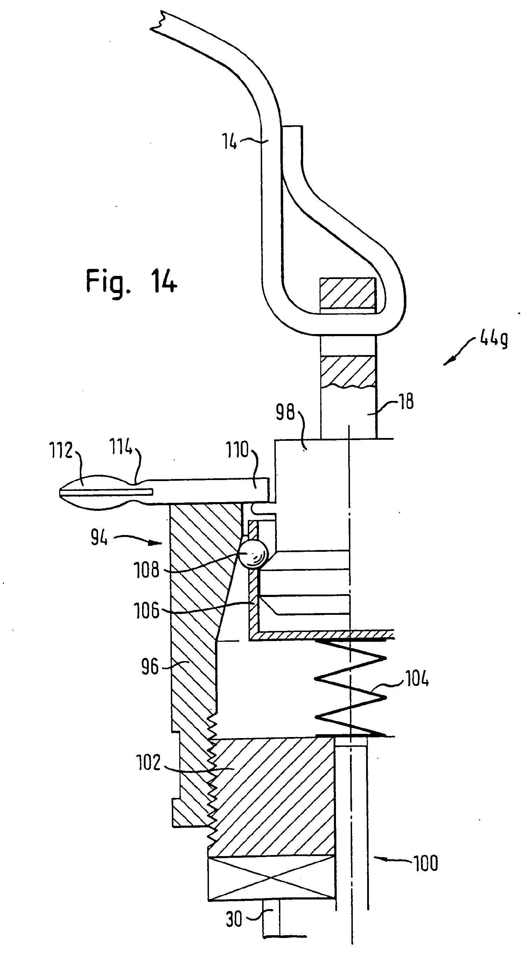

In Figur 14 ist eine Kugelkupplung 44g als weiterer Ausführungsform eines Kupplungsmechanismus dargestellt. Eine erste Kupplungshälfte 94, in Verbindung mit dem Beschlag 18, weist eine Gewindehülse 96 und ein Kupplungselement 98 mit abgeschrägten Flanken auf. Eine zweite Kupplungshälfte 100, die mit dem Angriffsmittel 30 verbunden ist, weist ein Spannstück 102 mit einem daran ausgebildeten Sechskant auf, welches ein Gewinde aufweist, das in Eingriff mit dem Gewinde der Gewindehülse 96 gebracht werden kann. Die Gewindehülse 96 weist ebenfalls einen Sechskant auf. An der zweiten Kupplungshälfte 100 ist eine Feder 104 vorgesehen, die einen Kugelträger 106, der eine Kugel 108, vorzugsweise eine Stahlkugel, trägt, zum Beschlag 18 hin beaufschlagt. Beim Ineinanderstecken der beiden Kupplungshälften 94, 100 wird die Feder 104 durch das Kupplungselement 98 zusammengedrückt, so daß die Kugel 108 zwischen einer an der Gewindehülse 96 ausgebildeten Schräge und einer der schrägen Flanken des Kupplungselements 98 einrastet. Durch das Aufschrauben der Gewindehülse 96 auf das Gewinde des Spannstücks 102 wird die Kupplung gegen unbeabsichtigtes Lösen gesichert. An der Gewindehülse 96 ist außerdem ein Kunststoffklips 110 mit einem Rastelement 112 vorgesehen, mit dem der Kupplungsmechanismus 44g am Befestigungselement 22 fixiert werden kann. Das Rastelement 112 weist eine Sollbruchstelle 114 auf, so daß sich bei einer eventuellen Straffung der Kupplungsmechanismus 44g vom Befestigungselement 22 lösen kann. Eine derartige Sollbruchstelle kann auch bei sämtlichen anderen Varianten des Kupplungsmechanismus vorgesehen sein.

Das baukastenförmig aufgebaute flexible Fahrzeuginsassen-Rückhaltesystem hat auch den Vorteil, daß die gewünschten Bauteile bereits am Befestigungselement 22 vormontiert werden können. So können z.B. das Gurtschloß, der oder die Gurtstraffer und eventuelle Umlenkungen bereits am Befestigungselement 22 fixiert werden, bevor dieses mit dem Fahrzeugsitz 24 verbunden wird. Der Fahrzeugsitz 24 kann, wie in der Fahrzeugfertigung üblich, als eines der letzten Bauteile ins Fahrzeug eingesetzt werden. Bevorzugt ist eines der Teile eines Kupplungsmechanismus bereits entweder mit dem Angriffsmittel 30 oder direkt mit dem Befestigungselement 22 verbunden. In diesem Fall kann, nach dem Einsetzen des Fahrzeugsitzes ins Fahrzeug, entweder ein Umlenkbeschlag in das Gurtband 14 eingefädelt werden, der das jeweilige zweite Teil des Kupplungsmechanismus aufweist, wobei die beiden Teile, wie oben beschrieben, leicht miteinander in Verbindung gebracht werden können, um den Beschlag 18 mit dem Befestigungselement 22 zu verbinden. Alternativ kann auch der ansonsten am Fahrzeug befestigte Endbeschlag mit dem jeweiligen zweiten Teil des Kupplungsmechanismus und dann entsprechend mit dem jeweiligen ersten Teil des Kupplungsmechanismus schnell und einfach verbunden werden.

## Patentansprüche

1. Fahrzeuginsassen-Rückhaltesystem mit
einer Sicherheitsgurtanordnung (12), die ein Gurtband (14), ein Gurtschloß (16) und einen End- oder Umlenkbeschlag (18) aufweist,
einem Angriffsmittel (30), das mit dem End- oder Umlenkbeschlag (18) verbunden ist, und
wenigstens einem mit dem Angriffsmittel (30) verbundenen, als End- oder Umlenkbeschlagstraffer ausgebildeten Gurtstraffer (20),
**dadurch gekennzeichnet, daß** die Verbindung zwischen dem Angriffsmittel (30) und dem End- oder Umlenkbeschlag (18) in Form eines Kupplungsmechanismus (44b-g) realisiert ist.

2. Fahrzeuginsassen-Rückhaltesystem nach Anspruch 1, **dadurch gekennzeichnet, daß** der Kupplungsmechanismus (44b) eine Gewindehülse (50) und einen Gewindebolzen (52) aufweist, wobei eines der beiden Bauteile (50, 52) mit dem Angriffsmittel (30) und das andere Bauteil (52, 50) mit dem End- oder Umlenkbeschlag (18) verbunden ist.

3. Fahrzeuginsassen-Rückhaltesystem nach Anspruch 1, **dadurch gekennzeichnet, daß** der Kupplungsmechanismus (44c; 44d) eine erste Kupplungshälfte (53) mit wenigstens einer Öffnung (54) und eine zweite Kupplungshälfte (56; 56') mit einem Rastnocken (58; 64) aufweist, wobei der Rastnocken (58; 64) in die Öffnung (54) eingreifen und die erste Kupplungshälfte (53) und die zweite Kupplungshälfte (56; 56') aneinander fixieren kann und wobei eine der Kupplungshälften (53, 56; 56') mit dem Angriffsmittel (30) und die andere Kupplungshälfte (53, 56; 56') mit dem End- oder Umlenkbeschlag (18) verbunden ist.

4. Fahrzeuginsassen-Rückhaltesystem nach Anspruch 1, **dadurch gekennzeichnet, daß** der Kupplungsmechanismus (44e; 44f) eine erste Kupplungshälfte (66; 82) mit wenigstens einer Vertiefung (72, 86) und eine zweite Kupplungshälfte (68; 84) mit einem Vorsprung (70; 88) aufweist, wobei der Vorsprung (70; 88) in die Vertiefung (72; 86) eingreifen und die erste Kupplungshälfte (66; 82) und die zweite Kupplungshälfte (68; 84) aneinander fixieren kann und wobei eine der Kupplungshälften (66; 82, 68; 84) mit dem Angriffsmittel (30) und die andere Kupplungshälfte (68; 84, 66; 82) mit dem Endoder Umlenkbeschlag (18) verbunden ist.

5. Fahrzeuginsassen-Rückhaltesystem nach Anspruch 4, **dadurch gekennzeichnet, daß** die erste und die zweite Kupplungshälfte (66, 68) von einer verschiebbaren Hülle (78) umgeben sind.

6. Fahrzeuginsassen-Rückhaltesystem nach Anspruch 1, **dadurch gekennzeichnet, daß** der Kupplungsmechanismus (44g) eine Steckkupplung, insbesondere eine Kugelkupplung, ist.

7. Fahrzeuginsassen-Rückhaltesystem nach einem der vorhergehenden Ansprüchen, **dadurch gekennzeichnet, daß** ein langgestrecktes, starres Befestigungselement (22) vorgesehen ist, das sich unterhalb eines Fahrzeugsitzes (24) erstreckt.

8. Fahrzeuginsassen-Rückhaltesystem nach Anspruch 7, **dadurch gekennzeichnet, daß** der Gurtstraffer (20) am Befestigungselement (22) montiert ist.

9. Fahrzeuginsassen-Rückhaltesystem nach einem der Ansprüche 7 und 8, **dadurch gekennzeichnet, daß** eine Verbindungsstelle zwischen Angriffsmittel (30) und End- oder Umlenkbeschlag (18) über ein lösbares Bauteil (64; 80; 92;112) am Befestigungselement (22) montiert ist.

10. Fahrzeuginsassen-Rückhaltesystem nach Anspruch 9, **dadurch gekennzeichnet, daß** das lösbare Bauteil (64; 80; 92; 112) eine Sollbruchstelle (114) aufweist.

11. Fahrzeuginsassen-Rückhaltesystem nach einem der Ansprüche 7 bis 10, **dadurch gekennzeichnet, daß** am Befestigungselement (22) ein auf die Geometrie des End- oder Umlenkbeschlags (18) abgestimmtes Haltemittel (21) vorgesehen ist, das eine unmittelbare Befestigung des End- oder Umlenkbeschlags (18) am Befestigungselement (22) erlaubt.

12. Fahrzeuginsassen-Rückhaltesystem nach Anspruch 11, **dadurch gekennzeichnet, daß** das Haltemittel durch eine Kupplungshälfte des Kupplungsmechanismus (44b-g) gebildet ist.

13. Fahrzeuginsassen-Rückhaltesystem nach einem der vorhergehenden Ansprüche, **gekennzeichnet durch** zwei Schienen (26), mit denen ein Fahrzeugsitz (24) verbunden ist und die zur Fahrzeugsitzverschiebung zum Eingriff in fahrzeugbodenfeste Gegenschienen (28) ausgebildet sind, wobei sich ein Befestigungselement (22) zwischen den Schienen (26) erstreckt und mit den Schienen (26) verbunden ist.
